Europäisches Patentamt

European Patent Office

Office européen des brevets

(19)

(11) Numéro de publication: **0 417 585 B1**

## FASCICULE DE BREVET EUROPEEN

(12)

(45) Date de publication de fascicule du brevet: **30.03.94**

(51) Int. Cl.5: **C08F 14/22**, C08F 2/18, C09D 5/46

(21) Numéro de dépôt: **90116843.5**

(22) Date de dépôt: **03.09.90**

(54) **Procédé pour la polymérisation en discontinu dans un milieu aqueux de mise en suspension du fluorure de vinylidène.**

(30) Priorité: **15.09.89 FR 8912228**

(43) Date de publication de la demande:
**20.03.91 Bulletin 91/12**

(45) Mention de la délivrance du brevet:
**30.03.94 Bulletin 94/13**

(84) Etats contractants désignés:
**AT BE CH DE DK ES FR GB IT LI LU NL SE**

(56) Documents cités:
**EP-A- 0 120 524**
**EP-A- 0 215 710**
**US-A- 3 781 265**

(73) Titulaire: **SOLVAY (Société Anonyme)**
**Rue du Prince Albert, 33**
**B-1050 Bruxelles(BE)**

(72) Inventeur: **Lasson, Pierre**
**Avenue des Liserons, 31/16**
**B-1020 Bruxelles(BE)**

(74) Mandataire: **Marckx, Frieda et al**
**Solvay**
**Département de la Propriété Industrielle**
**310, rue de Ransbeek**
**B-1120 Bruxelles (BE)**

EP 0 417 585 B1

**Description**

La présente invention concerne un procédé pour la polymérisation en discontinu dans un milieu aqueux de mise en suspension du fluorure de vinylidène. Elle concerne plus particulièrement un procédé conduisant à l'obtention de polymères du fluorure de vinylidène sous la forme de particules sphériques dont la densité apparente est élevée.

Les avantages que procure l'augmentation de la densité apparente des polymères sont bien connus. C'est ainsi que l'augmentation de la densité apparente d'un polymère facilite son essorage et son séchage, améliore sa coulabilité et rend plus aisée l'incorporation des ingrédients nécessaires à sa mise en oeuvre, tels que stabilisants, lubrifiants, charges, pigments etc. Dans le cas où il est souhaitable de granuler le polymère avant mise en oeuvre, une densité apparente élevée assure par ailleurs une alimentation plus aisée des granulatrices et donc une amélioration de leur productivité. Enfin, il existe des applications des polymères du fluorure de vinylidène où l'on met en oeuvre des poudres de polymère, telles que le pistolage électrostatique et le rotomoulage, et pour lesquelles une densité apparente élevée est recherchée en vue de permettre la réduction du nombre de couches à appliquer.

Dans la demande de brevet européen EP-A-0 120 524 (SOLVAY & Cie), on mentionne que l'on peut augmenter la productivité des réacteurs utilisés à la polymérisation dans un milieu aqueux de mise en suspension du fluorure de vinylidène en procédant à des injections supplémentaires de monomère en cours de polymérisation, lesdites quantités supplémentaires n'étant pas quantifiées.

Dans le brevet US-A-3.781.265 (PENNWALT CORP.) relatif à un procédé pour la polymérisation en milieu aqueux du fluorure de vinylidène à température supercritique avec injection en cours de polymérisation du monomère, de l'initiateur, de l'accélérateur et de l'agent de transfert de chaînes, on prévoit la possibilité d'introduire dans la charge initiale jusqu'à 20 % en poids environ de la quantité totale de monomère mise en oeuvre.

Dans la demande de brevet européen EP-A-0 215 710 (ATOCHEM), on décrit un procédé pour la polymérisation en milieu aqueux des fluoroéthylènes, tels que le fluorure de vinylidène, dans lequel on élimine progressivement de l'eau de la charge initiale en cours de polymérisation et on maintient la pression dans le réacteur par ajout de monomère, l'eau soutirée pouvant représenter 1/3 à 1 fois la quantité initiale de monomère.

Dans aucun de ces documents, il n'est fait mention de la possibilité d'augmenter la densité apparente des polymères du fluorure de vinylidène par le biais d'une injection différée de monomère.

Dans le brevet FR-A-1.531.139 du 13.07.1967 (KUREHA KAGAKU), on décrit un procédé pour augmenter la densité apparente des poudres de polymères du fluorure de vinylidène issus d'une polymérisation en suspension aqueuse de fluorure de vinylidène à une température inférieure à sa température critique (30,1 °C). Selon ce procédé, on densifie le polymère en effectuant une ou plusieurs injections différées de fluorure de vinylidène en des quantités aptes à provoquer la diminution de la pression aussitôt que la valeur de reprise, c'est-à-dire la pression de vapeur saturante, a été atteinte, de manière à empêcher la polymérisation du monomère dans la charge. Les exemples du brevet FR-A-1.531.139 illustrent l'obtention de poudres de polyfluorure de vinylidène présentant des densités apparentes maximales de 0,53-0,54 g/cm$^3$ après plusieurs dizaines d'heures de polymérisation.

Dans le brevet français FR-A-1.566.920 du 14.05.1968 (KUREHA KAGAKU), on préconise d'améliorer la productivité en initiant la polymérisation du fluorure de vinylidène en suspension aqueuse à une température inférieure à sa température critique (30,1 °C) et en élevant la température à une valeur comprise encre 60 et 150 °C dans la période finale de polymérisation. Au cours de l'étape finale, on peut ajouter une quantité supplémentaire de fluorure de vinylidène, généralement non supérieure à 25 % en poids de la quantité de monomère initialement chargée. Cette injection différée de monomère a pour effet de densifier le polymère. L'exemple 3 du brevet français FR-A-1.569.920 illustre l'obtention d'une poudre de polyfluorure de vinylidène ayant une densité apparente de 53,6 g/dl après 26 heures de polymérisation.

Aucune indication concrète permettant de déterminer au préalable le nombre nécessaire d'injections différées et/ou la quantité totale de fluorure de vinylidène à injecter en différé pour obtenir une densité voulue n'est fournie dans les deux brevets français précités. Les procédés de l'art antérieur sont donc fort empiriques et par ailleurs peu productifs. Ils divulguent des poudres de polyfluorure de vinylidène dont la densité apparente est inférieure à 0,55 g/cm$^3$.

La présente invention vise à procurer un procédé qui ne présente pas les inconvénients précités et qui permette, en particulier, la fabrication aisée et économique de poudres de polymères du fluorure de vinylidène sous la forme de particules sphériques présentant une densité apparente élevée, supérieure à 0,55 g/cm$^3$ et variable à souhait jusqu'à 0,90 g/cm$^3$ environ.

2

A cet effet, l'invention concerne un procédé pour la polymérisation en discontinu dans un milieu aqueux de mise en suspension du fluorure de vinylidène à l'intervention d'un initiateur oléosoluble de la polymérisation radicalaire en présence d'un agent de mise en suspension dans lequel la polymérisation s'effectue à température supercritique et une portion du fluorure de vinylidène est injectée en différé (c'est-à-dire en cours de polymérisation), le rapport pondéral entre la portion injectée en différé et la portion introduite initialement dans la charge de polymérisation variant entre 0,30 et 1,10.

La température de polymérisation du procédé selon l'invention se situant impérativement au-dessus de la température critique du fluorure de vinylidène (30,1°C), la polymérisation s'effectue, de fait, au sein d'une suspension aqueuse de fluorure de vinylidène gazeux.

La présente invention est basée sur la constatation que, dans le cadre d'une polymérisation à température supercritique, il existe une relation directe entre la densité apparente des polymères du fluorure de vinylidène produits et la quantité relative de monomère introduit en différé au cours de la polymérisation.

Le tableau ci-dessous fournit des valeurs indicatives sur la relation existant, dans le cadre du procédé selon l'invention, entre le rapport pondéral portion de fluorure de vinylidène injectée en différé/portion de fluorure de vinylidène mise en oeuvre dans la charge initiale (rapport D/I) et la densité apparente du polyfluorure de vinylidène. La densité apparente est mesurée selon la norme française NF T51-042 (équivalente à la norme ISO 1068).

| Rapport D/I | Densité apparente, g/cm$^3$ |
|---|---|
| 0,10 | 0,47 |
| 0,25 | 0,55 |
| 0,40 | 0,60 |
| 0,70 | 0,75 |
| 1,10 | 0,90 |

Le procédé selon l'invention permet donc la fabrication de polymères du fluorure de vinylidène de densité apparente élevée, supérieure à 0,55 g/cm$^3$ et variable à souhait jusqu'à 0,90 g/cm$^3$ environ par le choix approprié préalable de la quantité relative de fluorure de vinylidène injectée en cours de polymérisation.

Suivant un mode de réalisation préféré de la présente invention, le rapport entre la portion de fluorure de vinylidène injectée en différé et celle mise en oeuvre initialement varie entre 0,40 et 1,10.

Le mode d'incorporation du fluorure de vinylidène en différé n'est pas critique. Le fluorure de vinylidène injecté en différé peut donc être injecté en totalité en une fois ou encore par portions ou en continu. Néanmoins, on l'injecte de préférence en continu. Habituellement, on commence l'injection de fluorure de vinylidène en différé dès que la température de polymérisation souhaitée est atteinte.

Mise à part la particularité de l'injection différée de quantités définies de fluorure de vinylidène en fonction de la densité apparente recherchée pour le polymère, les conditions de polymérisation du fluorure de vinylidène n'ont rien de particulièrement critique.

Par polymérisation du fluorure de vinylidène, on entend désigner, aux fins de la présente invention, l'homopolymérisation du fluorure de vinylidène, ainsi que la copolymérisation de mélanges de monomères à teneur prépondérante, et de préférence supérieure à 85 % molaires, en fluorure de vinylidène, tels que par exemple, des mélanges de fluorure de vinylidène et d'autres oléfines fluorées telles que le fluorure de vinyle, le trifluoréthylène, le chlorotrifluoréthylène, le tétrafluoréthylène et l'hexafluorpropylène.

La température de polymérisation se situe impérativement au-dessus de 30,1°C. En pratique, on ne dépasse généralement pas des températures de polymérisation de 110°C. Suivant un mode de réalisation préféré de la présente invention, on effectue la polymérisation du fluorure de vinylidène à une température comprise entre 40 et 100°C et sous des pressions initiales de fluorure de vinylidène d'environ 55 à 200 bars.

Dans le procédé selon l'invention, on peut initier la polymérisation à l'intervention des initiateurs oléosolubles usuels de la polymérisation radicalaire du fluorure de vinylidène. Des exemples représentatifs de tels initiateurs sont les peroxydicarbonates de dialkyles, le peroxyde d'acétylcyclohexansulfonyle, le peroxyde de dibenzoyle, le peroxyde de dicumyle, les perbenzoates de t-alkyle et les perpivalates de t-alkyle. On donne néanmoins la préférence aux peroxydicarbonates de dialkyles, tels que les peroxydicarbonates de diéthyle et de di-isopropyle et aux perpivalates de t-alkyle tels que les perpivalates de t-butyle et de t-amyle et, plus particulièrement encore, aux perpivalates de t-alkyle.

La quantité d'initiateur oléosoluble mis en oeuvre à la polymérisation n'est pas critique. On peut donc mettre en oeuvre les quantités usuelles d'initiateur, c'est-à-dire d'environ 0,05 à 3 % en poids par rapport à la totalité du monomère mis en oeuvre. Néanmoins, on préfère utiliser d'environ 0,05 à 0,5 % en poids d'initiateur, ce qui assure l'obtention de polymères présentant une bonne stabilité thermique.

La nature de l'agent de mise en suspension utilisé dans le procédé selon l'invention n'est pas non plus critique. Il peut donc être choisi parmi les agents de mise en suspension usuels utilisés à la polymérisation radicalaire dans un milieu aqueux de mise en suspension, tels que par exemple les alcools polyvinyliques et les éthers cellulosiques hydrosolubles, tels que les alkyl- et les alkylhydroxyalkylcelluloses. On donne néanmoins la préférence aux éthers cellulosiques hydrosolubles. A titre d'exemples de pareils éthers cellulosiques, on peut mentionner les méthylcelluloses, les éthylhydroxyéthylcelluloses et les méthylhydroxypropylcelluloses. L'emploi d'éthers cellulosiques hydrosolubles procure, dans le cadre de la présente invention, des poudres de polymères du fluorure de vinylidène sous la forme de particules sphériques dont le diamètre moyen se si tue aux environs de 100 $\mu$m. La viscosité des éthers cellulosiques n'est pas critique. Celle-ci peut donc varier dans de très larges proportions. En pratique, on peut faire appel à des éthers cellulosiques dont la viscosité à 20°C en solution aqueuse à 2 % va de 15 à 4000 mPa.s. A l'intérieur de cette gamme de concentrations, on a observé qu'il existe une relation entre la viscosité de l'éther cellulosique et la dimension moyenne des particules de polymère, en ce sens que les viscosités les plus élevées conduisent aux granulométries les plus grossières. L'utilisation d'éthers cellulosiques présentant des viscosités à 20°C en solution aqueuse à 2 % comprises entre 15 et 4000 mPa.s conduit à l'obtention de polymères du fluorure de vinylidène en particules sphériques dont la dimension moyenne varie entre 85 et 120 $\mu$m environ.

Néanmoins, on a constaté que la mise en oeuvre d'éthers cellulosiques très visqueux peut provoquer l'apparition d'oeils-de-poisson dans les produits finis. Pour cette raison, on donne la préférence aux éthers cellulosiques dont la viscosité à 20°C en solution aqueuse à 2 % ne dépasse pas 1500 mPa.s. De même, en vue d'éviter la présence de particules très fines, on donne la préférence aux éthers cellulosiques dont la viscosité à 20°C en solution aqueuse à 2 % est égale à 35 mPa.s au moins. On donne donc la préférence à l'utilisation comme agents de mise en suspension aux éthers cellulosiques dont la viscosité à 20°C en solution aqueuse à 2 % est comprise entre 35 et 1500 mPa.s et, plus particulièrement encore entre 50 et 1000 mPa.s.

La quantité d'agent de mise en suspension est habituellement comprise entre 0,1 et 5 pour mille en poids par rapport à la quantité totale de monomère mis en oeuvre. Les meilleurs résultats sont obtenus lorsqu'on utilise de 0,2 à 2 pour mille en poids.

La polymérisation peut s'effectuer en présence d'un régulateur de chaînes. A titre d'exemples de régulateurs de chaînes connus du polyfluorure de vinylidène, on peut mentionner les cétones contenant de trois à quatre atomes de carbone, les alcools saturés contenant de trois à six atomes de carbone, les carbonates de bis(alkyle) dont les groupements alkyles contiennent cinq atomes de carbone au plus. Lorsqu'on fait appel à un régulateur de chaînes, celui-ci est mis en oeuvre en des quantités usuelles. Pour fixer les idées, les agents régulateurs de chaînes sont généralement mis en oeuvre à raison d'environ 0,5 à 5 % en poids par rapport à la quantité totale de monomère mise en oeuvre.

Les polymères du fluorure de vinylidène obtenus selon le procédé de l'invention sont isolés de manière usuelle de leur milieu de polymérisation par essorage suivi de séchage.

Le procédé selon l'invention permet la fabrication de polymères du fluorure de vinylidène sous la forme de particules sphériques ayant une densité apparente élevée, supérieure à 0,55 g/cm³ et variable à souhait jusqu'à 0,90 g/cm³ environ et, plus particulièrement, au moins égale à 0,60 g/cm³.

Les polymères du fluorure de vinylidène à densité apparente élevée obtenus selon le procédé de l'invention conviennent tout particulièrement pour la mise en oeuvre à l'état de poudre. L'utilisation des polymères du fluorure de vinylidène obtenus selon le procédé de l'invention pour le revêtement d'articles par poudrage, et en particulier pour le pistolage électrostatique et le rotomoulage, constitue un autre aspect de la présente invention.

Les exemples qui suivent sont destinés à illustrer le procédé selon l'invention. Les exemples 1 à 4 illustrent le procédé de l'invention. L'exemple 5 est donné à titre comparatif.

Exemples

Dans un réacteur de 4 litres, muni d'un agitateur de type turbine et d'une double enveloppe, on introduit successivement 2480 g d'eau déminéralisée et 33 g d'une solution de dipersant cellulosique à 15 g/l dont la nature et la viscosité sont précisées au Tableau I. On met l'agitation en marche à 880 t/min. On élimine la plus grande partie de l'oxygène présent dans le réacteur par trois mises sous vide à 40 mbars (à

4

15°C) avec, après chaque mise sous vide, remise sous pression de 1 bar d'azote. On introduit alors 2,5 g de perpivalate de tert-amyle (initiateur) et du carbonate de bis(éthyle) (régulateur de chaînes) dans les quantités précisées au Tableau I. Après cinq minutes, on introduit la charge initiale de fluorure de vinylidène dont les quantités sont précisées au Tableau II, puis on met progressivement en chauffe le réacteur jusqu'à atteindre un premier palier de température de 52°C. La pression à cette température atteint 120 à 125 bars. La consommation de monomère pendant la polymérisation se traduit par une chute de pression qui est compensée par une injection différée de monomère en des quantités précisées au Tableau II dans lequel figure également le rapport D/I tel que défini plus haut. Après trois heures de polymérisation et lorsque la quantité de fluorure de vinylidène injecté en différé atteint la valeur désirée, l'injection est arrêtée et la température du réacteur est portée à 65°C pendant deux heures pour terminer la polymérisation. On dégaze la suspension aqueuse en abaissant la pression jusqu'à la pression atmosphérique et on lave le polymère sur essoreuse jusqu'à ce que les eaux de lavage ne contiennent plus de mousse. On sèche le polymère en étuve à 60°C jusqu'à poids constant. Dans le Tableau II sont repris la durée totale de polymérisation, ainsi que le taux de conversion. Enfin, dans le Tableau III figurent les propriétés des polymères du fluorure de vinylidène produits selon les exemples 1 à 5 et, en l'occurrence, le poids spécifique apparent par tassement (PSAT), la dimension moyenne des particules (DMP), ainsi que la viscosité intrinsèque. La viscosité intrinsèque $[\eta]$, exprimée en l/g, a été calculée à partir de la viscosité spécifique, mesurée à 25°C, d'une solution à 2 g/l de polyfluorure de vinylidène dans le diméthylformamide suivant la formule:

$$[\eta] = \text{limite de} \left( \frac{\text{viscosité spécifique}}{\text{concentration}} \right) \text{ pour } C = 0$$

Tableau I

| N° de l'exemple | Dispersant cellulosique | | Régulateur de chaînes CBE, g |
|---|---|---|---|
| | Nature * | Viscosité, mPa.s | |
| 1 | EHEC | 300 | 34,5 |
| 2 | EHEC | 300 | 70 |
| 3 | MHPC | 400 | 53 |
| 4 | MHPC | 50 | 53 |
| 5 | EHEC | 300 | 34 |

* EHEC = éthylhydroxyéthylcellulose
MHPC = méthylhydroxypropylcellulose

Tableau II

| N° de l'exemple | Conditions de polymérisation | | | | |
|---|---|---|---|---|---|
| | VF$_2$ mis en oeuvre, g | | Rapport D/I | Durée totale, h, min. | Taux de conversion, % |
| | en initial | en cours | | | |
| 1 | 970 | 390 | 0,40 | 5h10min | 89 |
| 2 | 970 | 1053 | 1,09 | 8h05min | 94 |
| 3 | 970 | 702 | 0,72 | 5h50min | 94 |
| 4 | 970 | 702 | 0,72 | 5h15min | 92 |
| 5 | 994 | 0 | -- | 5h10min | 85 |

## EP 0 417 585 B1

Tableau III

| Propriétés des polyfluorures de vinylidène | | | |
|---|---|---|---|
| N° de l'exemple | PSAT, g/cm$^3$ | DMP, $\mu$m | Viscosité intrinsèque [$\eta$], l/g |
| 1 | 0,62 | 111 | 0,108 |
| 2 | 0,88 | 112 | 0,085 |
| 3 | 0,77 | 112 | 0,088 |
| 4 | 0,75 | 92 | 0,090 |
| 5 | 0,41 | 112 | 0,082 |

**Revendications**

1. Procédé pour la polymérisation en discontinu dans un milieu aqueux de mise en suspension du fluorure de vinylidène à l'intervention d'un initiateur oléosoluble de la polymérisation radicalaire en présence d'un agent de mise en suspension, caractérisé en ce que la polymérisation s'effectue à température supercritique avec injection différée, c'est-à-dire en cours de polymérisation, d'une portion du fluorure de vinylidène, le rapport pondéral entre la portion de fluorure de vinylidène injectée en différé et celle introduite initialement dans la charge de polymérisation variant entre 0,30 et 1,10.

2. Procédé pour la polymérisation en discontinu du fluorure de vinylidène selon la revendication 1, caractérisé en ce que le rapport pondéral entre la portion de fluorure de vinylidène injectée en différé et celle introduite initialement dans la charge de polymérisation varie entre 0,40 et 1,10.

3. Procédé pour la polymérisation en discontinu du fluorure de vinylidène selon la revendication 1, caractérisé en ce que l'agent de mise en suspension est un éther cellulosique hydrosoluble présentant une viscosité à 20°C en solution aqueuse à 2 % comprise entre 35 et 1500 mPa.s.

4. Procédé pour la polymérisation en discontinu du fluorure de vinylidène selon la revendication 1, caractérisé en ce qu'il est appliqué à la polymérisation à une température comprise entre 40 et 100°C et sous une pression initiale de 55 à 200 bars.

## Claims

1. Process for the noncontinuous polymerization of vinylidene fluoride in an aqueous suspending medium with the use of an oil-soluble initiator for radical polymerization in the presence of a suspending agent, characterized in that the polymerization is performed at supercritical temperature with deferred injection, that is to say injection in the course of polymerization, of a fraction of the vinylidene fluoride, the weight ratio of the fraction of vinylidene fluoride which is injected with deferment to that introduced initially into the polymerization charge varying between 0.30 and 1.10.

2. Process for the noncontinuous polymerization of vinylidene fluoride according to Claim 1, characterized in that the weight ratio of the fraction of vinylidene fluoride which is injected with deferment to that introduced initially into the polymerization charge varies between 0.40 and 1.10.

3. Process for the noncontinuous polymerization of vinylidene fluoride according to Claim 1, characterized in that the suspending agent is a water-soluble cellulose ether which has a viscosity of between 35 and 1500 mPa s at 20°C in aqueous solution at a concentration of 2 %.

4. Process for the noncontinuous polymerization of vinylidene fluoride according to Claim 1, characterized in that it is applied to polymerization at a temperature of between 40 and 100°C and at an initial pressure of 55 to 200 bars.

6

EP 0 417 585 B1

**Patentansprüche**

1. Verfahren zur diskontinuierlichen Suspensionspolymerisation von Vinylidenfluorid in wässrigem Medium mittels eines öllöslichen Initiators für die radikalartige Polymerisation in Anwesenheit eines Suspensionsmittels, dadurch gekennzeichnet, daß die Polymerisation durchgeführt wird bei superkritischer Temperatur mit verzögerter, das heißt während der Polymerisation durchgeführter Injektion eines Teils des Vinylidenfluorids, wobei das Gewichtsverhältnis zwischen dem verzögert injizierten und dem zu Beginn in die Polymerisationscharge eingeführten Vinylidenfluorid-Anteil zwischen 0,30 und 1,10 variiert.

2. Verfahren zur diskontinuierlichen Polymerisation von Vinylidenfluorid nach Anspruch 1, dadurch gekennzeichnet, daß das Gewichtsverhältnis zwischen dem verzögert injizierten und dem zu Beginn in die Polymerisationscharge eingeführten Vinylidenfluoridanteil zwischen 0,40 und 1,10 variiert.

3. Verfahren zur diskontinuierlichen Polymerisation von Vinylidenfluorid nach Anspruch 1, dadurch gekennzeichnet, daß das Suspensionsmittel ein wasserlöslicher Zelluloseether ist, der eine Viskosität bei 20°C in wässriger Lösung von 2% zwischen 35 und 1500 mPa.s aufweist.

4. Verfahren zur diskontinuierlichen Polymerisation von Vinylidenfluorid nach Anspruch 1, dadurch gekennzeichnet, daß es zur Polymerisation bei einer Temperatur zwischen 40 und 100°C und unter einem Anfangsdruck von 55 bis 200 bar verwendet wird.

7